# FASCICULE DE BREVET EUROPEEN

(11) **EP 1 019 870 B1**
(45) Date de publication et mention de la délivrance du brevet: **22.10.2003**
(21) Numéro de dépôt: 98947600.7
(22) Date de dépôt: 05.10.1998
(51) Int. Cl.: G06K 19/077

(54) **PROCEDE POUR LA FABRICATION D'UN DISPOSITIF ELECTRONIQUE A PUCE ET A ANTENNE ET DISPOSITIF OBTENU PAR LE PROCEDE**
HERSTELLUNGSVERFAHREN FÜR EINE HALBLEITERCHIPVORRICHTUNG MIT ANTENNE UND SO HERGESTELLTE VORRICHTUNG
METHOD FOR MAKING AN ELECTRONIC DEVICE WITH CHIP AND ANTENNA AND DEVICE OBTAINED BY SAID METHOD

(30) Priorité: 03.10.1997 FR 9713734
(43) Date de publication de la demande: 19.07.2000
(73) Titulaire: GEMPLUS, 13881 Gémenos Cédex (FR)
(72) Inventeur: BRUNET, Olivier, F-13008 Marseille (FR); ODDOU, Laurent, F-13600 La Ciotat (FR)
(86) Numéro de dépôt international: FR9802121
(87) Numéro de publication internationale: WO99018540

(56) Documents cités:
- EP-A- 0 376 062
- EP-A- 0 698 859
- PATENT ABSTRACTS OF JAPAN vol. 096, no. 012, 26 décembre 1996 & JP 08 216573 A (HITACHI CHEM CO LTD), 27 août 1996
- PATENT ABSTRACTS OF JAPAN vol. 018, no. 675 (E-1648), 20 décembre 1994 & JP 06 268434 A (MEISEI ELECTRIC CO LTD), 22 septembre 1994
- PATENT ABSTRACTS OF JAPAN vol. 096, no. 002, 29 février 1996 & JP 07 276605 A (HITACHI LTD;OTHERS: 01), 24 octobre 1995

## Description

L'invention concerne un procédé pour la fabrication d'un dispositif électronique à puce et/ou à antenne, tel qu'une carte à puce sans contact ou hybride ou étiquette, ledit dispositif électronique comportant au moins une feuille de décoration ayant une face externe apparente et au moins une interface comportant une antenne.

Les cartes à puce comprennent généralement une puce ou un module à puce qui compris au moins partiellement dans un substrat isolant par exemple une couche de matière thermoplastique et qui est relié à une antenne plane constituant une interface et deux feuilles externes de décoration en matière thermoplastique disposées chacune sur une face de la carte à puce et qui peuvent présenter des inscriptions ou des logos. Le cas échéant, un film de protection (overlay) tel qu'un vernis recouvre les feuilles externes.

Actuellement, les antennes sont réalisées sur une feuille support spécifique intermédiaire par gravure de cuivre selon la technique des circuits imprimés. Elle est ensuite insérée entre une feuille externe de protection et la puce ou module. La carte à puce est généralement obtenue par une opération de laminage ou d'injection au cours de laquelle les différentes feuilles en matière thermoplastique sont soudées ou collées entre elles et/ou avec le substrat.

Cette feuille intermédiaire support d'antenne entraîne une épaisseur supplémentaire d'environ 130 microns, ce qui pose des problèmes pour respecter l'épaisseur maximale de 840 µm fixée par la norme ISO.

Par ailleurs, la réalisation de l'antenne sur la feuille support intermédiaire constitue une étape supplémentaire de fabrication, ce qui augmente le coût de fabrication tant du point de vue de la matière que du point de vue du temps. En outre, il subsiste le fait que la gravure de l'antenne de cette manière s'avère assez onéreuse.

Les antennes sont des bobinages de fil de cuivre en l'air, à l'extrémité desquels sont connectés des puces ou des modules. L'ensemble bobine et module ou puce est appelé transpondeur.

Pour fabriquer la carte, le transpondeur est inséré entre au moins deux feuilles thermoplastiques ou deux feuilles thermoplastiques et noyé dans une colle, puis le tout est laminé. La difficulté d'emploi de ces transpondeurs pour la fabrication des cartes du type «sans contact» provient des problèmes de manipulation rencontrés pour la préhension et la dépose précise des transpondeurs sur les feuilles plastiques.

Les temps de cycle de fabrication se retrouvent pénalisés par ce problème.

Le problème à la base de l'invention est de réaliser une carte à puce sans contact ou hybride plus économique tout en étant performante.

Parmi, les techniques de réalisation d'antenne plus économique, on connaît la sérigraphie d'encre conductrice toutefois cette technique n'est pas adapté au domaine des cartes à puce en particulier sans contact. Il se pose des problèmes liés au séchage de l'encre et des problèmes d'ondulation.

Les encres disponibles sèchent à environ 150°C ce qui est incompatible avec les matériaux couramment utilisés dans le domaine de la carte à puce tels le PVC, ABS qui ont une température de ramollissement d'environ 60 °C.

D'autres matériaux tels que le PC et PET ont une température de ramollissement plus élevée d'environ 120° C à 130° C qui est encore inférieure à la température de séchage optimal des encres. Ces matériaux sont par contre plus onéreux que les précédents.

La sérigraphie sur des feuilles ou films minces inférieure d'environ 600 µm sur les matériaux des cartes à puces pose également des problèmes d'ondulation de leur surface visibles à l'oeil nu. On peut en effet observer des ondulations au verso d'une telle feuille en dessous des spires et qui constituent un défaut d'aspect.

D'autre part, pour réaliser des antennes performantes il est nécessaire d'avoir la meilleure conductivité possible que l'on peut obtenir notamment par l'emploi de spires plus larges et à condition d'avoir un bon séchage.

Le problème est que la surface disponible pour une antenne est limitée en raison d'une surface d'embossage réservée.

En outre, les encres une fois séchée, ne présentent pas toutes une tenue en flexion suffisante compatible avec les normes en vigueur sur les cartes à puce.

En raison des difficultés ci-dessus, la tendance n'est pas d'utiliser la sérigraphie dans le domaine de la carte à puce notamment pour réaliser des circuits conducteurs de bonne conductivité sur des films minces tels que des antennes performantes.

L'invention a pour objectif de pallier ces inconvénients.

A cet effet, l'invention a pour objet un procédé et un dispositif électronique à puce et à antenne, selon les revendications 1 et 12. Le document EP0376062 décrit la fabrication d'un module avec un substrat en matière isolante où est fixée une bobine de couplage inductif. La bobine épaisse forme un logement où est fixée une puce. Plusieurs bobines sont fixées sur le substrat alors en ruban, qui est découpé pour obtenir des modules. Ces modules sont destinés à être intégrés à des cartes à puces. Le document EP0698859 décrit dans le cadre de la fabrication d'une carte à puce, l'encollage d'un ruban de papier et l'impression électrostatique de graphismes. Des étiquettes sont ainsi obtenues, découpées dans le papier et attachées sur le corps de carte. Les températures d'impression électrostatique sont très élevées, entre 100° et 190°. Le document JP06268434 décrit l'obtention d'une antenne où les ondes polarisées en cercle ont une large bande. Une face d'irradiation est pourvue d'un motif imprimé formé de deux conducteurs en spirale courbe constante sur un plan d'impression de circuit. Le document JP07276605 décrit le retrait et le rinçage d'un liquide sur un cadre d'impression par sérigraphie, à basse température et de faible durée. Le document JP08216573 décrit la fabrication d'une carte fine, à bonne planéité du type sans contact. Une antenne imprimée et un circuit intégré sont imprimés sur un film en polyester, en utilisant une pâte d'argent. Le document US5599046 décrit un ticket de loterie avec des éléments de circuit. La figure 34 montre un conducteur imprimé sur le ticket pour obtenir une antenne radio fréquence. Une composition d'encre prévoit l'évaporation d'un solvant après l'impression. Le document US6130602 décrit un timbre postal, carte ou badge pourvu d'un circuit intégré fixé à une paire d'antennes qui sont sérigraphiées avec un conducteur polymère épais sur la face arrière du timbre. Un motif graphique est visible sur la face arrière de ce timbre. Une couche d'isolant époxy est appliquée à l'arrière du timbre pour sceller l'antenne. De préférence, l'antenne et le circuit sont imprimés simultanément sur l'arrière d'une grande feuille qui est ensuite individualisée en cartes.

D'autres caractéristiques et avantages de l'invention ressortiront de la description qui suit, faite à titre illustratif et nullement limitatif, en se référant aux dessins ci-annexés sur lesquels:
la figure 1 représente en coupe verticale une carte à puce de type connu,
la figure 2 représente en coupe verticale une carte à puce selon la présente invention,
les figures 3 et 4 représentent respectivement le recto et le verso d'une feuille de base avant l'opération de sérigraphie,
la figure 5 représente le recto de la feuille de base après l'opération de sérigraphie, et
la figure 6 est une vue de profil correspondant à la figure 5.

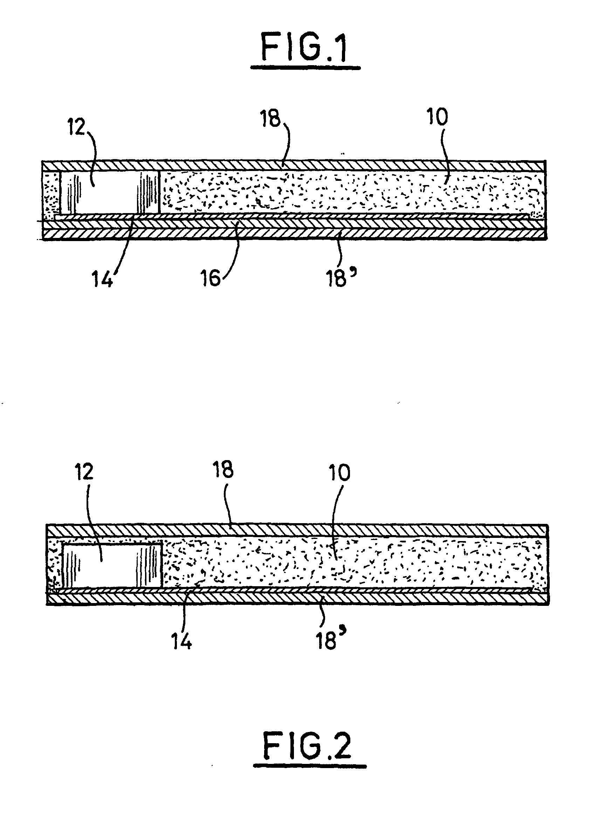

On voit sur la figure 1, une carte à puce du type "sans contact" ou "hybride" comportant une antenne plane constituant une interface sans contact. Elle comprend essentiellement un substrat 10 tel qu'une couche en matière isolante, dans lequel est noyé une puce ou un module 12 qui est connecté à une antenne 14 qui est réalisée sur une feuille support intermédiaire 16. L'ensemble est protégé par deux feuilles externes thermoplastiques de protection 18 et 18'. Le cas échéant, un film de protection transparent peut recouvrir les feuilles externes.

L'épaisseur du substrat 10 avec la puce ou module 12 est, par exemple, d'environ 400 microns, l'épaisseur des feuilles externes de protection 18 et 18' est d'environ 200 microns et celle de la feuille intermédiaire 16 avec l'antenne 14 d'environ 130 microns. L'épaisseur maximale de l'ensemble est de 800 microns, conformément à la norme ISO.

On a représenté sur la figure 2, toujours en coupe longitudinale, une carte à puce selon la présente invention. On retrouve le substrat 10 avec sa puce ou module 12 et les feuilles de protection 18 et 18'.

Conformément à l'invention, l'antenne 14 est réalisée sur la face intérieure d'une des feuilles de protection 18, respectivement 18'.

Ceci permet tout d'abord un gain d'épaisseur d'environ 150 microns. On peut donc ainsi fabriquer, par exemple, des cartes à puce d'épaisseur inférieure à 800 microns si on le désire.

Par ailleurs, il y une feuille de moins à indexer, ce qui entraîne un gain en matière et en temps pour le prix de revient.

Dans le cas de cartes à puces sans contact, cela supprime l'opération de double dépôt (dispense) de matière sur les deux faces de la feuille intermédiaire ou de perçage de la feuille intermédiaire pour permettre le fluage de la résine à travers cette feuille. Il en résulte un gain important supplémentaire sur le temps de cycle.

Grâce à l'invention, on peut réduire l'épaisseur de la carte au niveau de la puce ou du module pour une carte sans contact ; l'interface entre la puce ou le module et l'antenne est plus éloigné du centre de la carte à puce, par conséquent, pour une épaisseur égale de la puce ou du module, l'épaisseur de la carte dans cette zone sera mieux contrôlée. En particulier, les points durs de la carte seront plus éloignés des feuilles extérieures de protection.

L'invention permet aussi d'utiliser des puces ou modules plus épais et, par suite, par exemple, de supprimer une opération de réduction d'épaisseur (backlap), par exemple par fraisage.

Enfin, l'invention permet d'éviter les défauts d'impression dans le cas où la feuille de protection n'est pas préimprimée, mais fournie blanche et imprimée après la fabrication de la carte.

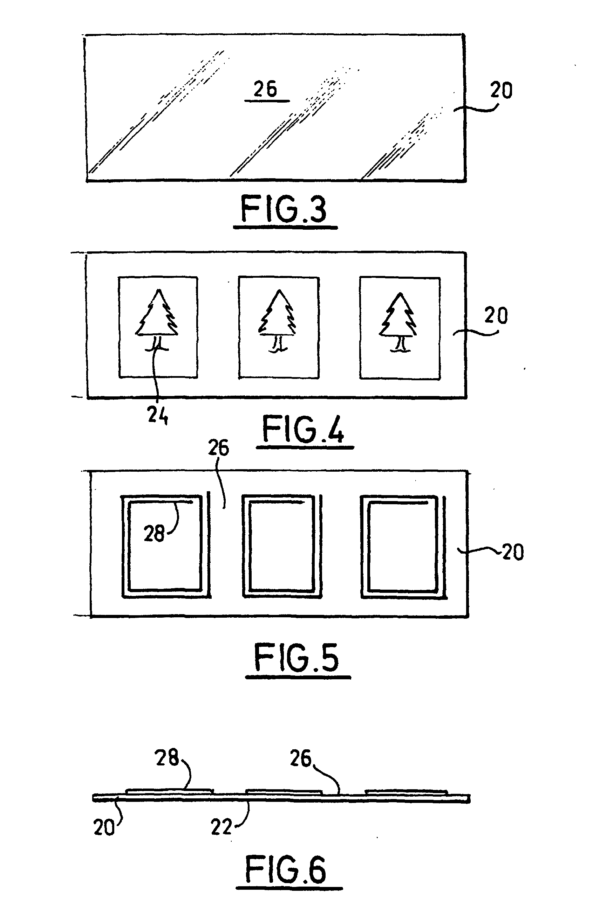

Avantageusement, comme représenté sur les figures 3 à 6, on réalise simultanément plusieurs feuilles supports d'antenne, par exemple trois, sur une feuille thermoplastique de base 20 qui comporte sur sa face extérieure 22 trois logos 24 préimprimés et sur la face intérieure 26 de laquelle on réalise trois antennes 28 par sérigraphie.

Cette feuille de base est ensuite découpée pour obtenir trois feuilles de protection supports d'antenne. Ceci permet de réduire le coût de fabrication, en particulier en supprimant des opérations de mise en place de feuilles de protection préimprimées.

La carte à puce selon la présente invention peut être fabriquée de la manière suivante.

On imprime trois logos 24 sur la face arrière de la feuille thermoplastique de base 20 ; cette impression peut éventuellement être protégée par une opération de laminage d'une couche de protection (overlay) ou par application d'un vernis.

Bien entendu, si l'on veut fabriquer des cartes à puce "blanches" sans impression, cette première opération est supprimée.

On passe alors à la réalisation des antennes.

Selon l'invention, la fabrication d'un dispositif électronique à puce et à antenne, tel qu'une carte à puce sans contact ou hybride ou étiquette, comportant au moins une feuille de décoration ayant une face externe apparente (18, 18'), et au moins une interface comportant une antenne (14, 28) comporte l'étape suivante essentielle.

Selon cette étape on réalise l'antenne sur une face de la feuille de décoration, opposée à la face externe apparente, par sérigraphie d'une encre conductrice.

On peut obtenir ainsi un dispositif élémentaire de base constitué d'une feuille de décoration et comportant au moins antenne. D'autres éléments conducteurs peuvent être réalisées de la même manière. Des élements électroniques en particulier une puce ou un module à puce peuvent être ultérieurement connectés et/ou enrobés.

Le procédé peut comporter en outre une étape selon laquelle on dispose au moins une couche de matière isolante sur ladite face opposée de manière à recouvrir l'antenne au moins en partie. Cela conduit à la réalisation d'un dispositif électronique notamment du type carte à puce. Des films supplémentaires de protection peuvent également être ajoutés.

La couche de matière isolante peut être réalisée de diverses manières et notamment par une opération de laminage à chaud ou à froid d'une seconde feuille ou par injection ou pulvérisation.

L'interface constituée par au moins une antenne et/ou des contacts peut être connecté à une puce ou un module à puce préalablement ou postérieurement à la réalisation de la couche de matière isolante.

Dans ce dernier cas, les connexions de l'antenne peuvent être accessibles par une réservation d'accès soit par un usinage d'un accès.

La feuille de décoration comprend un matériau polymère mais peut éventuellement être réalisée sur tout autre matériau altérable ou déformable tel une feuille de papier.

Dans un exemple de mise en oeuvre du procédé, la feuille préimprimée est placée sur la table d'une machine de sérigraphie, par exemple, de type MPM, avec sa face imprimée contre la table. Pour éviter la formation de rayures sur le verso imprimé, on fait subir à la table un traitement permettant d'adoucir la surface de la table en supprimant les aspérités; on peut, par exemple, réaliser un traitement par anodisation ou un revêtement avec du Téflon.

Par ailleurs, la table de la machine de sérigraphie est munie de pions d'indexation rapide qui limitent le glissement de la feuille sur la surface de la table.

Pendant le cycle de sérigraphie, de l'encre conductrice est transférée de la surface de l'écran à la feuille de décoration selon le motif de l'antenne, par exemple, en spirale "carrée" comme représenté sur la figure 5.

Lors de cette phase de sérigraphie, pour des résultats optimaux, il est recommandé de contrôler des paramètres sérigraphiques susceptibles d'agir plus ou moins sur la qualité du résultat tels que :
- l'absence de contact entre l'écran et la feuille de protection,
- la vitesse de la sérigraphie,
- la pression de la sérigraphie,
- la nature et la configuration de l'écran de sérigraphie,
- la nature et la géométrie des racles de la machine de sérigraphie, par exemple en utilisant des racles en polyuréthanne.

Les dimensions de l'écran de sérigraphie, par exemple un écran de sérigraphie toilé, déterminent le nombre d'antennes pouvant être réalisées sur une même feuille de base 20.

Après l'étape de sérigraphie, on extrait l'ensemble de la feuille avec l'encre liquide de la machine de sérigraphie et on le transfère dans un four de séchage, tel qu'un four connu sous la dénomination commerciale OPTIMA.

Lors du passage dans le four, le solvant contenu dans l'encre conductrice s'évapore et l'antenne prend une forme solide formée de particules conductrices et d'un liant. Les paramètres du séchage susceptibles d'influer sur le résultat sont :
- la température des différentes zones du four,
- la durée du séchage et
- le flux d'air ou d'azote injecté dans le four.

La reproductibilité des antennes aux propriétés recherchées sans déformation de la feuille de protection lors du séchage dépend des paramètres ci-dessus. La déformation peut être induite par une température trop élevée ou un retrait trop important de l'encre.

Le tapis maillé du four est isolé de la feuille de protection par une plaque de protection plastique introduite dans le four en même temps que les feuilles de protection. Cette plaque de protection protège des rayures la face imprimée de la feuille de protection.

On peut aussi, pour réaliser cette protection, équiper le four de séchage d'un tapis maillé en matière plastique ou traité ou encore des ceintures en ruban plastique.

La fabrication se continue ensuite de manière connue pour la fabrication d'une carte sans contact ou hybride. On réalise une connexion solide de la puce ou module 12 avec l'antenne 14 sans déformer ni endommager la face imprimée de la feuille de protection.

La dernière opération est un assemblage de carte à puce par laminage à froid ou à chaud ou par injection dans des conditions qui ne font pas ressortir la trace de l'antenne sur la face imprimée de la feuille de protection qui devient une face visible de la carte finale.

De bons résultats exempts d'ondulations ont été obtenus avec les conditions opératoires ci-après sur des feuilles en PVC ou ABS ou même en papier:
- Encre: référence D5028 ou E520 de la Société Dupont de Nemours.
- Température de séchage optimal de l'encre: environ 150 °C.
- Température du four : 50 à 80 °C.
- Durée de séchage : 3 à 10 mn.

Le procédé trouve son intérêt de préférence sur des feuilles d'épaisseur inférieure à 600 µm. De bons résultats ont été obtenus sur des films polymères très minces d'épaisseur allant de 100 µm à environ 15 µm.

Dans le cas de feuille ou film en P.C. ou PET, la température du four peut être comprise entre 120°C et 130°C.

Pour respecter une zone de la carte réservée à un embossage tout en conservant la performance de l'antenne, liée à sa conductivité, le dispositif électrique ou électronique de l'invention comporte des spires d'inégales largeurs entre ses extrémités de connexion.

De bons résultats ont été obtenus avec un rapport de largeur entre les spires les plus larges et les plus étroites variant de deux à cinq, la valeur étroite étant égale à environ 0,5 mm.

Ainsi, on a pu obtenir par exemple une carte à puce munie d'une antenne à quatre spires s'étendant le long de ses bords latéraux. Elle comporte une zone étroite pour l'antenne s'étendant jusqu'à 5 mm du bord inférieur de la carte dans laquelle sont sérigraphiées quatre spires d'environ 0,4 mm l'antenne ayant à ce niveau largeur totale de 4 mm. Par contre, le long d'autres bords de la carte, notamment le bord opposé ou le bord adjacent la carte comporte des spires chacune de largeur égale à environ 1,8 mm, l'antenne ayant à ce niveau une largeur de 8 mm.

Cette disposition et forme de l'antenne permet d'augmenter ou de compenser une insuffisance de conductibilité d'une l'encre conductrice. De surcroît lorsqu'elle est partiellement séchée. L'efficacité de la communication radio n'en est pas affectée, une portée de l'antenne égale à 8 mm ayant ainsi été obtenue.

## Revendications

1. Procédé de fabrication d'un dispositif électronique puce et antenne ; ce dispositif comportant au moins une feuille de décoration ayant une face externe apparente (18, 18'), ainsi qu'au moins une interface comportant l'antenne (14, 28) ; ce procédé comportant une étape suivant laquelle on réalise l'antenne sur une face de la feuille de décoration, opposée à la face externe apparente, par sérigraphie d'une encre conductrice ; **caractérisé en ce que** :
□ Avant l'étape où on réalise l'antenne, la feuille (18, 18', 20) subit une pré-impression graphique ;
□ La sérigraphie de l'encre conductrice est réalisée sur la feuille de décoration fine en matériau ayant une température de ramollissement ou de dégradation inférieure à une température de séchage optimal de l'encre, l'encre ayant une température de séchage optimal prédéterminée;
□ On fournit l'encre conductrice comportant un taux de particules métalliques compris entre environ 60% et 95 % dans une matrice polymère et un solvant ; et
□ On effectue, après sérigraphie de l'encre, un séchage partiel de l'encre à une température inférieure à la température de séchage optimal de l'encre, maximale auprès de la température de ramollissement ou de dégradation du matériau de la feuille.

2. Procédé selon la revendication 1, **caractérisé en ce que** la feuille (18, 18', 20) comporte un film de protection transparent sur sa face externe apparente.

3. Procédé selon la revendication 1 ou 2, **caractérisé en ce qu'**il comporte en outre une étape selon laquelle on dispose au moins une couche de matière isolante sur la face opposée de manière à recouvrir l'antenne au moins en partie.

4. Procédé selon la revendication 3, **caractérisé en ce que** la couche de matière isolante est réalisée par une opération de laminage à chaud ou à froid d'une seconde feuille ou par injection ou pulvérisation.

5. Procédé selon l'une des revendications 3 à 4, **caractérisé en ce que** l'on effectue une connexion de l'interface à une puce ou un module à puce préalablement à la réalisation de la couche de matière isolante.

6. Procédé selon l'une des revendications 3 à 4, **caractérisé en ce que** l'on effectue une connexion de l'interface à une puce ou un module à puce postérieurement à la réalisation de la couche de matiÈre isolante, les connexions de l'antenne étant accessibles.

7. Procédé selon l'une des revendications 1 à 6, **caractérisé en ce que** l'encre comporte des particules d'argent et à un taux compris entre 70% et 85%.

8. Procédé selon l'une des revendications précédentes, **caractérisé en ce que** la feuille de décoration à une épaisseur inférieure à 600 µm, par exemple comprise entre 15 µm et 100 µm.

9. Procédé selon l'une des revendications 1 à 8, **caractérisé en ce que** la température de séchage est égale à environ 60° C.

10. Procédé selon l'une des revendications 1 à 9, **caractérisé en ce qu'**on utilise une machine de sérigraphie comportant une table ayant subi un traitement de lissage de surface, tel qu'une anodisation ou un revêtement avec un polymère dit « Téflon ».

11. Procédé selon l'une des revendications 1 à 10, **caractérisé en ce que** l'on fait passer la feuille de décoration dans un four comportant un tapis maillé, et **en ce que** l'on introduit simultanément une plaque de protection entre le tapis maillé et la feuille de décoration (20), ce tapis maillé étant par exemple en matière plastique ou en inox, tandis que le four de séchage comporte par exemple des ceintures en ruban plastique.

12. Dispositif électronique à puce et à antenne, tel qu'une, carte à puce sans contact ou hybride ou étiquette, obtenu selon le procédé conforme à l'une des revendications 1 à 11 ; le dispositif comportant au moins une feuille de décoration ayant une surface apparente, ainsi qu'au moins une Interface comportant une antenne sur une face de la feuille de décoration opposée à la face externe apparente ; **caractérisé en ce que** l'antenne (14 ; 28) comporte des spires d'inégales largeurs entre ses extrémités de connexion, et le rapport de largeur entre les spires les plus larges et les plus étroites varie de deux à cinq.

## Patentansprüche

1. Herstellungsverfahren für eine elektronische Chipvorrichtung und Antenne; wobei diese Vorrichtung wenigstens eine dekorative Folie mit einer offensichtlichen Außenseite (18, 18') sowie wenigstens eine die Antenne (14, 28) umfassende Schnittstelle hat; wobei dieses Verfahren eine Stufe umfasst, nach der man die Antenne auf einer Seite der dekorativen Folie gegenüber der offensichtlichen Außenseite durch Serigraphie einer leitfähigen Druckfarbe realisiert; **dadurch gekennzeichnet, dass**:
- die Folie (18, 18', 20) vor der Stufe, in der man die Antenne realisiert, einem graphischen Vordruck unterzogen wird;
- die Serigraphie der leitfähigen Druckfarbe auf der dünnen leitfähigen Folie aus Material mit einer Erweichungs- oder Abbautemperatur unter einer optimalen Trockentemperatur der Druckfarbe realisiert wird; wobei die Druckfarbe eine vorbestimmte optimale Trockentemperatur hat;
- man die leitfähige Druckfarbe mit einem zwischen ungefähr 60 % und 95 % inbegriffenen Anteil von Metallpartikeln in eine Polymermatritze und ein Lösungsmittel einbringt; und
- man nach der Serigraphie der Druckfarbe ein teilweises Trocknen bei einer Temperatur unter der optimalen, bei der Erweichungs- oder Abbautemperatur des Materials der Folie maximalen Trocknungstemperatur der Druckfarbe vornimmt.

2. Verfahren gemäß Anspruch 1, **dadurch gekennzeichnet, dass** die Folie (18, 18', 20) auf ihrer offensichtlichen Außenseite einen transparenten Schutzfilm umfasst.

3. Verfahren gemäß Anspruch 1 oder 2, **dadurch gekennzeichnet, dass** es darüber hinaus eine Stufe umfasst, nach der man wenigstens eine Schicht isolierenden Materials auf der gegenüberliegenden Seite aufbringt, so dass die Antenne wenigstens teilweise abgedeckt wird.

4. Verfahren gemäß Anspruch 3, **dadurch gekennzeichnet, dass** die Schicht isolierenden Materials durch eine Warm- oder Kaltwalzoperation einer zweiten Folie oder durch Einspritzen oder Aufsprühen realisiert wird.

5. Verfahren gemäß Anspruch 3 und 4, **dadurch gekennzeichnet, dass** man vor der Realisierung der Schicht isolierenden Materials einen Anschluss der Schnittstelle an einen Chip oder ein Modul mit Chip durchführt.

6. Verfahren gemäß Anspruch 3 bis 4, **dadurch gekennzeichnet, dass** man nach der Realisierung der Schicht isolierenden Materials einen Anschluss der Schnittstelle an einen Chip oder ein Modul mit Chip durchführt, wobei die Verbindungen der Antenne zugänglich sind.

7. Verfahren gemäß Anspruch 1 bis 6, **dadurch gekennzeichnet, dass** die Druckfarbe Silberpartikel zu einem zwischen 70 % und 85 % inbegriffenen Anteil umfasst.

8. Verfahren gemäß einem der vorherigen Ansprüche, **dadurch gekennzeichnet, dass** die dekorative Folie mit einer Dicke von unter 600 µm, zum Beispiel zwischen 15 µm und 100 µm inbegriffen ist.

9. Verfahren gemäß Anspruch 1 bis 8, **dadurch gekennzeichnet, dass** die Trockentemperatur gleich ungefähr 60°C ist.

10. Verfahren gemäß Anspruch 1 bis 9, **dadurch gekennzeichnet, dass** man eine umfassende Serigraphiemaschine benutzt, die eine Platte umfasst, die einer O-berflächenglättungsbehandlung, wie zum Beispiel einer Anodisation oder einer Beschichtung mit einem "Teflon" genannten Polymer unterzogen wurde.

11. Verfahren gemäß Anspruch 1 bis 10, **dadurch gekennzeichnet, dass** man die dekorative Folie in einen einen Maschenteppich umfassenden Ofen schiebt und man gleichzeitig eine Schutzplatte zwischen dem Maschenteppich und der dekorativen Folie (20) einführt, wobei dieser Maschenteppich zum Beispiel aus Plastikmaterial oder rostfreiem Stahl ist, während der Trockenofen zum Beispiel Gürtel aus Plastikband umfasst.

12. Gemäß des Verfahrens gemäß Anspruch 1 bis 11 erhaltene elektronische Chip- und Antennenvorrichtung, wie zum Beispiel eine Karte ohne Kontakt oder Hybridkarte oder Etikett; wobei die Vorrichtung wenigstens eine dekorative Folie mit einer offensichtlichen Fläche aufweist, sowie wenigstens eine Schnittstelle mit einer Antenne auf einer Seite der dekorativen Folie gegenüber der offensichtlichen Außenseite; **dadurch gekennzeichnet, dass** die Antenne (14; 28) Windungen ungleicher Breiten zwischen ihren Verbindungsenden umfasst und das Breitenverhältnis zwischen den breitesten und den engsten Windungen von zwei bis fünf variiert.

## Claims

1. A method of manufacturing an electronic device with chip and antenna; this device comprising at least one decorative sheet having a visible external face (18, 18'), as well as at least one interface comprising the antenna (14, 28); this method comprising a step according to which the antenna is produced on one. face of the decorative sheet, opposite to the visible external face, via screen printing with a conductive ink; **characterised in that**:
□ before the step where the antenna is produced, the sheet (18, 18', 20) undergoes a graphical pre-printing;
□ the screen printing of the conductive ink is carried out on the thin decorative sheet made from material having a softening or degradation temperature less than a optimum drying temperature of the ink, the ink having a predetermined optimum drying temperature;
□ the conductive ink is supplied comprising a metallic particle content of between 60% and 95% in a polymer matrix and a solvent; and
□ after screen printing the ink, a partial drying of the ink is carried out at a temperature less than the optimum drying temperature of the ink, maximum close to the softening or degradation temperature of the material of the sheet.

2. A method according to Claim 1, **characterised in that** the sheet (18, 18', 20) comprises a transparent protective film on its visible external face.

3. A method according to Claim 1 or 2, **characterised in that** it also comprises a step according to which at least one layer of insulating material is disposed on the opposite face so as to at least partly cover the antenna.

4. A method according to Claim 3, **characterised in that** the layer of insulating material is produced by an operation of hot or cold lamination of a second sheet or by injection or spraying.

5. A method according to one of Claims 3 to 4, **characterised in that** a connection of the interface to a chip or a chip module is carried out prior to the production of the layer of insulating material.

6. A method according to one of Claims 3 to 4, **characterised in that** a connection of the interface to a chip or to a chip module is carried out subsequently to the production of the layer of insulating material, the connections of the antenna being accessible.

7. A method according to one of Claims 1 to 6, **characterised in that** the ink contains particles of silver in a proportion between 70% and 85%.

8. A method according to one of the preceding claims, **characterised in that** the decorative sheet has a thickness of less than 600 µm, for example between 15 µm and 100 µm.

9. A method according to one of Claims 1 to 8, **characterised in that** the drying temperature is approximately 60°C.

10. A method according to one of Claims 1 to 9, **characterised in that** a screen-printing machine is used comprising a table which has undergone a surface smoothing treatment, such as anodisation or coating with a polymer known as "Teflon".

11. A method according to one of Claims 1 to 10, **characterised in that** the decorative sheet is caused to pass through an oven comprising a mesh conveyer, and **in that** at the same time a protective plate is introduced between the mesh conveyer and the decorative sheet (20), this mesh conveyer being for example made from plastics material or stainless steel, whilst the drying oven comprises for example belts made from plastic strip.

12. An electronic device with chip and antenna, such as a contactless or hybrid smart card or a label, obtained according to the method in accordance with one of Claims 1 to 11; the device comprising at least one decorative sheet having a visible surface, as well as at least one interface comprising an antenna on a face of the decorative sheet opposite to the visible external face; **characterised in that** the antenna (14; 28) comprises turns of unequal width between its connection ends, and the width ratio between the widest and the narrowest turns varies from two to five.
